Europäisches Patentamt

European Patent Office

Office européen des brevets

(19)

(11) Veröffentlichungsnummer: **0 018 644**
**B1**

(12) **EUROPÄISCHE PATENTSCHRIFT**

(45) Veröffentlichungstag der Patentschrift:
23.06.82

(51) Int. Cl.³: **G 11 B 15/28,** B 65 H 59/20,
B 24 B 5/36

(21) Anmeldenummer: 80102367.2

(22) Anmeldetag: 02.05.80

(54) Verfahren zur Verbesserung der Gleichlaufqualität von Kontaktwickellaufwerken.

(30) Priorität: 07.05.79 DE 2918341

(43) Veröffentlichungstag der Anmeldung:
12.11.80 Patentblatt 80/23

(45) Bekanntmachung des Hinweises auf die Patenterteilung:
23.06.82 Patentblatt 82/25

(84) Benannte Vertragsstaaten:
AT DE FR GB NL

(56) Entgegenhaltungen:
GB-A-1 370 283
US-A-2 259 883
US-A-2 539 858
US-A-2 651 152
US-A-2 674 835
US-A-3 810 230
US-A-4 007 562
US-A-4 065 801

(73) Patentinhaber: BASF Aktiengesellschaft,
Carl-Bosch-Strasse 38, D-6700 Ludwigshafen (DE)

(72) Erfinder: Schoettle, Klaus, Ladenburger Strasse 70,
D-6900 Heidelberg (DE)
Erfinder: Dobler, Peter, Don-Carlos-Strasse 17,
D-6700 Ludwigshafen (DE)
Erfinder: Hoffmann, Werner, Bannwasserstrasse 62,
D-6700 Ludwigshafen (DE)
Erfinder: Gliniorz, Lothar, Carl-Bosch-Ring 24,
D-6710 Frankenthal (DE)

## Verfahren zur Verbesserung der Gleichlaufqualität von Kontaktwickellaufwerken

Die Erfindung betrifft ein Verfahren zur Verbesserung der Gleichlaufqualität von Kontaktwickellaufwerken für Bandabtastung, insbesondere für magnetische Videoaufzeichnungen, bei dem die Antriebsrolle des Laufwerks und eine Umlenkrolle eine in bezug auf Rundlauf vorzunehmende Oberflächenbearbeitung erfahren und daran anschließend in die in einer gemeinsamen Halterung des Kontaktwickellaufwerkes untergebrachten Lager eingesetzt werden, wobei die Bohrungen für die Aufnahme der Lager in die fertig montierte Halterung in einer einzigen Einspannlage eingebracht werden.

An die Gleichlaufqualität von Kontaktwickellaufwerken werden insbesondere für Magnetbandaufzeichnungen von Videosignalen hohe Anforderungen gestellt. Gleichlaufschwankungen des Magnetbandtransports im Bereich des Magnetkopfes haben Lesespannungsschwankungen zur Folge, die sich bei der Bildwiedergabe in Form hochfrequenter Bildschwankungen (Gleichlaufmodulation) störend auswirken. Ursache hierfür ist hauptsächlich ein Mangel an Rundlaufgenauigkeit bei den Abtriebs- und Führungs bzw. Umlenkrollen. Diese sowie die übrigen Montageteile werden für einen möglichst genauen Rundlauf einzeln bearbeitet, so daß sich bei der Gerätemontage sämtliche Bearbeitungs- und Montagetoleranzen summieren. Eine wirtschaftliche Ausbeute hinsichtlich einer erforderlichen Rundlaufgenauigkeit von 2 μm und kleiner ist daher mit den bisher üblichen Massenfertigungsmethoden nicht erreichbar.

Es ist bekannt, an der Antriebsrolle eines Magnetbandgeräts im eingebauten Zustand eine Oberflächenfeinstbearbeitung für eine hohe Rundlaufgenauigkeit vorzunehmen, indem das Magnetband über die Antriebsrolle entgegengesetzt zur Drehrichtung des Kapstan bewegt wird. Für Kontaktwickellaufwerke ist dieses Verfahren nicht anwendbar. (US-A-2 539 858)

Der Erfindung liegt die Aufgabe zugrunde, eine Methode zu schaffen, durch die die Gleichlaufqualität von Kontaktwickellaufwerken auf wirtschaftliche Weise verbessert werden kann.

Es wurde nun überraschenderweise gefunden, daß die Gleichlaufqualität verbessert werden kann, wenn die Antriebsrolle und die Umlenkrolle in der endgültigen Halterung, die in die Werkstückaufnahme einer Oberflächenbearbeitungsmaschine eingespannt wird, zusätzlich eine Oberflächenfeinstbearbeitung für eine hohe Rundlaufgenauigkeit in der Weise erhalten, daß die Antriebsrolle mit dem für das Laufwerk vorgesehenen Motor verbunden und von diesem angetrieben wird und die Umlenkrolle von einem ankuppelbaren Motor der Werkstückaufnahme in der Halterung angetrieben wird und die Oberflächen der beiden Rollen dabei bearbeitet werden. Dabei kann durch den Einsatz eines Profilschleifzylinders eine für den Bandtransport optimale Flächenform der Rollen erzeugt werden.

Es ist an sich bekannt, Rollen im eingebauten Zustand abzuschleifen (z. B. GB-A-1 370 283). Diese Anordnungen dienen aber dazu, abgenutzte Rollenoberflächen ohne einen kostspieligen Ausbau dieser Rollen zu erneuern.

Mit dem neuen Verfahren können die Bearbeitungs- und Montagetoleranzen der Einzelteile dagegen soweit eliminiert werden, daß die noch verbleibenden Gleichlaufschwankungen, die zum größten Teil dann nur noch vom Antriebsmotor herrühren, auf elektrischem Wege mit wenig Aufwand ausgeglichen werden können. Das Verfahren bewährt sich besonders durch die Möglichkeit, ohne hohen zusätzlichen Aufwand in einer Massenfertigung Laufwerksteile mit einer äußerst hohen Rundlaufgenauigkeit der am Bandtransport beteiligten Rollen mit wirtschaftlicher Ausbeute herzustellen.

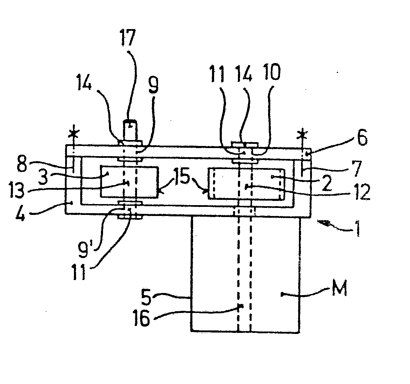

Das erfindungsgemäße Verfahren ist an Hand eines in der Zeichnung schematisch dargestellten Ausführungsbeispiels nachfolgend erläutert.

Die Halterung 1 für die Antriebsrolle 2 und die Umlenkrolle 3 wird aus einem U-förmigen Teil 4 mit angeformtem Gehäuse 5 für den Motor M der Antriebsrolle und aus einer Brücke 6 nach dem Einbringen der Verbindungsbohrungen 7, 8 durch Zusammenschrauben hergestellt. Die Bohrungen 9, 9' und 10 für die Lager der Wellen der Rollen 2, 3 werden in das Teil 4 in einer Werkstückeinspannung hergestellt, um exakte Achsparallelität zu erhalten. Die Halterung wird hiernach wieder zerlegt, damit in die Bohrungen 9, 9' und 10 die Lager 11 eingesetzt und in diese die vorher mit den Wellen 12, 13 versehenen Antriebsrolle 2 und die Umlenkrolle 3 eingebaut werden können. Auf der Seite des Teils 4 ist die Welle der Antriebsrolle mit der Motorwelle ohne Zwischenlager verbunden. Es werden vorzugsweise Gleitlager verwendet, bei denen die aus Sintermetall bestehenden Lagerbüchsen von einem mit Schmiermittel getränkten Filzring umgeben sind. Die Anmordnung ist nach außen durch eine Abdeckkapsel 14 abgeschlossen.

Die Oberflächen 15 der Antriebsrolle 2, die mit einem gummielastischen Belag versehen ist, und der vorzugsweise aus einer Leichtmetallegierung bestehenden Umlenkrolle 3 sind vorbearbeitet; die der Antriebsrolle zweckmäßigerweise durch Schleifen, die der Umlenkrolle durch Drehen und Schleifen. Neben einer Oberflächenvergütung dient die Vorbearbeitung besonders der Erzielung eines guten Rundlaufs der Rollen 2 und 3.

Nach dem erneuten Zusammensetzen der Halterung 1, die jetzt die Lager 11 und die darin gehaltene Antriebsrolle 2 und Umlenkrolle 3 enthält, wird diese in die Werkstückaufnahme einer handelsüblichen Maschine für Oberflächenbearbeitung (in der Zeichnung nicht dargestellt), beispielsweise für Drehen, Schleifen, Läppen oder Rollen, eingespannt. Der Motor M des Kontaktwickellaufwerks wird im Gehäuse 5 der Halterung 1 befestigt und an eine Stromquelle angeschlossen. Die Motorwelle 16 ist mit der Welle 12 der Antriebsrolle 2 fest verbunden. Die Welle 12 kann aber auch durch eine verlängerte Motorwelle ersetzt sein. Für den Antrieb der Umlenkrolle 3 dient ein in der Zeichnung nicht gezeigter Motor der Bearbeitungsmaschine, der für den Bearbeitungsvorgang über eine ebenfalls nicht dargestellte Kupplung am hervorstehenden Ende 17 der Welle 13 der Umlenkrolle ankuppelbar ist. Nach dem Inbetriebsetzen der Antriebsmotoren der Rollen 2, 3 werden deren zu bearbeitende Zylinderoberflächen mit einem Material abtragenden bzw. mit einem spanlos einwirkenden Bearbeitungselement, beispielsweise einem Schleifzylinder, in Kontakt gebracht, wobei die Drehzahl des Motors M für die Antriebsrolle mit Hilfe eines Potentiometers oder eines regelbaren Transformators optimal auf das elastische Material des Oberflächenbelags eingestellt werden kann. Dabei ist die Möglichkeit gegeben, durch entsprechende Formgebung des Schleifzylinders ein gewünschtes Oberflächenprofil der Antriebsrolle bzw. der Umlenkrolle zu erzeugen.

Es hat sich gezeigt, daß nach einem Materialabtrag von etwa 10 μm an den Oberflächen eine Rundlaufgenauigkeit von 1 μm und weniger erreicht ist.

## Patentansprüche

1. Verfahren zur Verbesserung der Gleichlaufqualität von Kontaktwickellaufwerken für Bandabtastung, insbesondere für magnetische Videoaufzeichnungen, bei dem die Antriebsrolle (2) des Laufwerks und eine Umlenkrolle (3) eine in bezug auf Rundlauf vorzunehmende Oberflächenbearbeitung erfahren und daran anschließend in die in einer gemeinsamen Halterung (1) des Kontaktwickellaufwerks untergebrachten Lager eingesetzt werden, wobei die Bohrungen für die Aufnahme der Lager in die fertig-montierte Halterung (1) in einer einzigen Einspannlage eingebracht werden, dadurch gekenzeichnet, daß die Antriebsrolle (2) und die Umlenkrolle (3) in der endültigen Halterung (1), die in die Werkstückaufnahme einer Oberflächenbearbeitungsmaschine eingespannt wird, zusätzlich eine Oberflächenfeinstbearbeitung für eine hohe Rundlaufgenauigkeit in der Weise erhalten, daß die Antriebsrolle (2) mit dem für das Laufwerk vorgesehenen Motor (M) verbunden und von diesem angetrieben wird und die Umlenkrolle von einem kuppelbaren Motor der Werkstückaufnahme in der Halterung angetrieben wird und die Oberflächen (15) der beiden Rollen (2, 3) dabei bearbeitet werden.

2. Verfahren nach Anspruch 1, dadurch gekennzeichnet, daß zumindest eine der beiden Rollen (2, 3) während ihrer Rotation mit einem Profilschleifzylinder in Kontakt gebracht wird.

## Claims

1. A process for reducing the flutter produced by transport apparatus, having a central capstan, for tape scanning, especially for magnetic video recordings, in which the drive capstan (2) of the transport apparatus and a guide roller (3) are subjected to surface finishing for true running, and are subsequently inserted in the bearings accommodated in a common support (1) of the transport apparatus, the holes for accommodating the bearings being made in the assembled support (1) when the latter is in a single clamped position, characterized in that the capstan (2) and the guide roller (3), in the assembled support (1), which is clamped in the workholding device of a surface-finishing machine, are additionally subjected to precision-finishing to give very true running, by connecting the drive capstan (2) to the motor (M) intended for use in the transport apparatus, and driving the capstan by this motor, and driving the guide roller, in the support, by a motor which can be conected thereto via a clutch and is associated with the work-holding device, and, in doing so, finishing the surfaces (15) of the capstan (2) and the roller (3).

2. A process as claimed in claim 1, characterized in that the capstan (2) and/or the guide roller (3) are brouht into contact with profile-grinding cylinders whilst the rotate.

## Revendications

1. Procédé pour améliorer la qualité de synchronisme des mécanismes de déroulement par contact pour lecture de bande, en particulier pour enregistrements magnétiques vidéo, dans lequel le galet d'entraînment (2) du mécanisme de déroulement et un galet de renvoi (3) subissent un traitement de surface relatif à la cylindricité et sont ensuite montés dans les paliers prévus dans un support commun (1) du mécanisme de déroulement, les alésages, destinés à recevoir les paliers dans le support (1) complètement monté, étant réalisés dans une seule position de montage, caractérisé par le fait que le galet d'entraînement (2) et le galet de renvoi (3) dans le support (1) définitif, qui est monté dans le port-pièce d'une machine de traitement de surface, subissent, en outre, un travail de superfinition pour obtenir une haute précision de cylindricité, en reliant le galet d'entraînement (2) au moteur (M) prévu pour le mécanisme de déroulement et entraîné par lui, et en entrainant le galet de renvoi par un moteur accouplable du porte-pièce dans le support, puis en soumettant les surfaces (15) des deux galets (2, 3) au dit travail.

2. Procédé selon la revendication 1, caractérisé par le fait qu'au moins un des deux galets (2, 3) est amené, pendant sa rotation, en contact avec un cylindre de meulage de forme.